# EUROPEAN PATENT APPLICATION

(11) **EP 1 998 047 A1**
(43) Date of publication of application: **03.12.2008**
(21) Application number: 07715206.4
(22) Date of filing: 05.03.2007
(51) Int. Cl.: F04C 29/00, B23K 26/02, B23K 26/20, F04B 39/12

(54) **METHOD OF PRODUCING COMPRESSOR, AND COMPRESSOR**

(30) Priority: 07.03.2006 JP 2006061628; 26.04.2006 JP 2006121670
(71) Applicant: DAIKIN INDUSTRIES, LTD., Osaka-shi, Osaka 530-8323 (JP)
(72) Inventor: KISHIKAWA, Mitsuhiko, Sakai-shi Osaka 592-8331 (JP); HIROUCHI, Takashi, Sakai-shi Osaka 592-8331 (JP); KAJIWARA, Mikio, Sakai-shi Osaka 592-8331 (JP); YAMAJI, Hiroyuki, Sakai-shi Osaka 592-8331 (JP); YAMAMOTO, Satoshi, Sakai-shi Osaka 592-8331 (JP); ARAI, Mie, Sakai-shi Osaka 592-8342 (JP)
(74) Representative: Goddar, Heinz J.
(86) International application number: PCT/JP2007/054181
(87) International publication number: WO 2007/102462

(57) **Abstract**

To provide a low-distortion compressor by controlling heat affects resulting from welding while sufficiently ensuring the welding strength of a casing and an inside part, or a body portion casing and end portion casings. A method for producing a compressor (1, 101) of the present invention comprises an aligning step and a welding step. The compressor is disposed with a casing (10, 11, 111) and an inside part (60, 125) that is housed in the casing. The casing includes a first portion (11a, 11w, 111w) on its inner surface (11s, 111s), and the inside part includes a second portion (60a, 61, 125b). The second portion faces the first portion. In the aligning step, the first portion and the second portion are caused to face each other. In the laser welding step, laser light is applied to at least part of the portion where the first portion and the second portion face each other, whereby the casing and the inside part are laser-welded together.

## Description

### TECHNICAL FIELD

The present invention relates to a method for producing a compressor and particularly to a method for producing a compressor where a casing and an inside part are welded together and a compressor where a body portion casing and end portion casings are welded together.

### BACKGROUND ART

Compressors such as scroll compressors and rotary compressors are conventionally widely used in order to compress refrigerant in refrigerators and the like.

In these compressors, fixing, by spot welding, an inside part that is disposed inside a casing with respect to a body casing has been performed. For example, in the compressor of Patent Document 1, a bearing that supports a rotating shaft of a motor and the body casing are spot-welded from the outside of the body casing in plural positions and joined together. Specifically, holes are formed in the body casing, and arc welding (TIG welding or the like) is performed using a welding filler in those holes, whereby the bearing is fixed to the body casing and the holes that had been formed in the body casing are plugged.
<Patent Document 1>
JP-A No. 2000-104691
<Patent Document 2>
JP-A No. 09-329082
<Patent Document 3>
JP-A No. 07-167059

### DISCLOSURE OF THE INVENTION

### PROBLEM THAT THE INVENTION IS TO SOLVE

As for the inside part, such as the bearing in the above-described scroll compressor or a cylinder in a rotary compressor, it is necessary for extremely high positional precision to be ensured in the compressor. Moreover, when distortion resulting from heat input during welding increases and the positional precision of the inside part of the compressor worsens, the amount of wear of the inside part and the like increases and the performance of the compressor drops.

However, in compressors and the like for compressing CO₂ (carbon dioxide) refrigerant of recent years, there is a tendency to increase the plate thickness of the casing because the pressure inside the compressor becomes higher in comparison to conventional fluorocarbon refrigerant. For example, the plate thickness of the casing that had conventionally been 3 to 4 mm is becoming thicker, to as much as 8 to 10 mm, in the case of recent CO₂ compressors. In a compressor disposed with such a casing, when a conventional method is employed where the inside part is fixed to the body casing by arc welding, the amount of heat input increases too much and ensuring the positional precision of the inside part becomes difficult. Meanwhile, it is conceivable to employ a method where, rather than directly welding the inside part, of which high positional precision is demanded, to the body casing, a mounting plate is welded to the body casing and then the inside part is fastened by bolts with respect to the mounting plate, but when this method is employed, there is the potential for costs to increase and for the compressor to become large.

It is an object of the present invention to provide a method for producing a compressor where ensuring the positional precision of an inside part becomes easy while the inside part is welded with respect to a body casing of the compressor.

### MEANS FOR SOLVING THE PROBLEM

A method for producing a compressor pertaining to a first invention comprises an aligning step and a laser welding step. The compressor is disposed with a casing and an inside part that is housed in the casing. The casing includes a first portion. The inside part includes a second portion. The second portion faces the first portion. In the aligning step, the first portion of the casing and the second portion of the inside part are caused to face each other. In the laser welding step, laser light is applied to at least part of the portion where the first portion and the second portion face each other, whereby the casing and the inside part are laser-welded together.

In this method for producing a compressor, in the aligning step, the first portion of the casing and the second portion of the inside part are caused to face each other. Additionally, in the next laser welding step, the laser light is applied to at least part of the portion where the first portion and the second portion face each other, whereby the casing and the inside part are laser-welded together. In this manner, in this method for producing a compressor, laser welding is used in the welding of the casing and the inside part, so heat affects resulting from welding are controlled in comparison to when arc welding is used, and a low-distortion compressor can be provided. As a result of this, ensuring the positional precision of the inside part becomes easy.

A method for producing a compressor pertaining to a second invention is the method for producing a compressor pertaining to the first invention, wherein in the aligning step, the casing and the inside part are aligned such that a clearance between the first portion and the second portion becomes greater than 0 mm and equal to or less than 0.6 mm. In the laser welding step, the first portion in a state where a hole is not formed therein is laser-welded to the second portion without a welding filler being supplied thereto.

In this method for producing a compressor, in the aligning step, the clearance between the first portion of the casing of the compressor and the second portion of the inside part of the compressor is maintained greater than 0 mm and equal to or less than 0.6 mm. Additionally, in the next laser welding step, the laser is applied, from the end surface side of the first portion on the opposite side with respect to the second portion, that is, from the outside of the casing, to the first portion and the second portion that have been aligned in the aligning step. In this manner, in this method for producing a compressor, laser welding is used in the welding of the casing and the inside part, so heat affects resulting from welding are controlled in comparison to when arc welding is used, and a low-distortion compressor can be provided. As a result of this, ensuring the positional precision of the inside part becomes easy. Further, the clearance between the first portion and the second portion is maintained greater than 0 mm and equal to or less than 0.6 mm, so the welding strength of the casing and the inside part can be sufficiently ensured.

Moreover, in this method for producing a compressor, during the welding of the casing and the inside part, it is not necessary to form a hole beforehand in the first portion, and a welding filler is also not used. Usually, in arc welding, the first portion and the second portion cannot be welded together with sufficient strength unless a hole is formed beforehand in a position that becomes the working point of the first portion because arc welding does not penetrate as deeply as in laser welding. Moreover, in arc welding, supply of a welding filler also becomes necessary. However, in this method for producing a compressor, laser welding is used, so production costs that become necessary in the formation of a hole and the addition of a welding filler can be omitted.

A method for producing a compressor pertaining to a third invention is the method for producing a compressor pertaining to the second invention, wherein in the aligning step, the casing and the inside part are aligned such that the clearance becomes greater than 0 mm and equal to or less than 0.2 mm.

In this method for producing a compressor, in the aligning step, the clearance between the first portion of the casing and the second portion of the inside part is maintained greater than 0 mm and equal to or less than 0.2 mm. Thus, in this method for producing a compressor, the welding strength of the casing and the inside part can be improved.

A method for producing a compressor pertaining to a fourth invention is the method for producing a compressor pertaining to the second invention or the third invention, wherein in the laser welding step, a melting site becomes the shape of an open curve when seen from a direction perpendicular to the first portion and the second portion. The melting site is a site of the first portion and the second portion to which the laser light is applied and which melts.

When the melting site forms a closed curve such as a circle, a closed space becomes defined by the first portion, the second portion and the melting site, and sometimes air that has been heated inside this closed space spews out in the vicinity of the endpoint of the welding trajectory or the like because of the pressure thereof and forms a hole forms in the melting site such that the air-tightness of the compressor is compromised. By contrast, in the method for producing a compressor pertaining to the third invention, in the welding step, the laser is applied such that the melting site forms an open curve. Thus, in this method for producing a compressor, the aforementioned problem can be avoided and the air-tightness of the compressor can be ensured.

A method for producing a compressor pertaining to a fifth invention is the method for producing a compressor pertaining to the fourth invention, wherein in the laser welding step, the melting site becomes V-shaped when seen from a direction perpendicular to the first portion and the second portion.

Usually, in laser welding, the working point thereof becomes minute in comparison to in the case of arc welding, so it is preferable to draw the shape of the melting site as between a line and a plane and not a spot. However, when the shape of the melting site is drawn as a straight line in the up-down direction or the left-right direction, the welding strength becomes vulnerable to vibration or the like in the left-right direction or the up-down direction, and when the shape of the melting site is drawn as a cross where straight lines in the up-down direction and the left-right direction intersect, there is the potential for heat affects at the intersection to increase and bring about a drop in the strength in the vicinity of the intersection. Further, enlarging the melting site more than necessary needlessly increases production costs. Thus, in the method for producing a compressor pertaining to the fifth invention, in the laser welding step, the laser is applied such that the melting site forms a V. In the case of a V shape, sufficient welding strength can be obtained while the amount of welding is controlled in comparison to a spiral shape, a C shape or a U shape that are the same closed curve, for example. In this manner, in this method for producing a compressor, the welding strength can be easily ensured.

A method for producing a compressor pertaining to a sixth invention is the method for producing a compressor pertaining to the fifth invention, wherein in the laser welding step, the apex of the V of the melting site becomes a rounded shape.

In this method for producing a compressor, in the laser welding step, the laser is applied such that the apex of the V of the melting site becomes a rounded shape. Thus, in this method for producing a compressor, concentration of stress in the apex of the V of the melting site can be avoided.

A method for producing a compressor pertaining to a seventh invention is the method for producing a compressor pertaining to the first invention, wherein in the laser welding step, the laser light is applied to at least part of the portion where the first portion and the second portion face each other such that the laser light follows the inner surface of the casing, whereby the casing and the inside part are laser-welded together.

Here, rather than welding together the casing and the inside part by arc welding as has conventionally been the case, the welding of both is performed by laser welding.

In a method where the laser is applied such that the laser penetrates the casing from the outside of the casing, when the plate thickness of the casing is large, the penetration region of the casing and the inside part ends up becoming small unless time is taken to ensure a large amount of heat input. On the other hand, when the amount of heat input is increased, ensuring the positional precision of the inside part becomes difficult because of distortion.

In light of this, in the seventh invention, the laser light is directly applied at an angle along the inner surface of the casing with respect to the portion where the first portion of the inner surface of the casing and the second portion of the inside part that contacts the first portion face each other. In this manner, here, a method is employed where the laser light is directly applied from the inside of the casing to the portion where the first portion and the second portion face each other to perform laser welding, so the penetration region of both is increased with a relatively small amount of heat input and the strength of the joint portion is ensured.

Further, because the casing and the inside part are directly welded together by laser welding, it becomes unnecessary to intervene an intermediate member such as the mounting plate that had conventionally been used, and costs can be lowered and the compressor can be made compact.

It will be noted that, when the amount of heat input is the same, in comparison to a method where the laser light is applied from the outside of the casing, penetrates the casing and welds the inside part, the strength of the joint portion becomes higher when the method of the present invention, where the laser light is directly applied to the portion where both face each other, is employed.

A method for producing a compressor pertaining to an eighth invention is the method for producing a compressor pertaining to the seventh invention, wherein the thickness of the first portion of the casing is equal to or greater than 5 mm.

When the casing is thick in this manner, when the laser light is allowed to penetrate from the outside of the casing to weld the first portion of the inner surface of the casing and the second portion of the inside part together, the welding region becomes small and large heat input is inputted to the inside part in order to ensure the welding region.

However, here, a method is employed where the laser light is directly applied from the inside of the casing to the portion where the first portion and the second portion face each other, so a sufficient welding region can be ensured with a small amount of heat input.

It will be noted that the effects of the present invention become particularly remarkable when the plate thickness of the casing exceeds 7 mm.

A method for producing a compressor pertaining to a ninth invention is the method for producing a compressor pertaining to the seventh invention or the eighth invention, wherein the compressor is a scroll type compressor and is disposed with a rotating machine and a rotating mechanism that includes a bearing that supports a rotating shaft of the rotating machine. Further, the inside part is the bearing of the rotating mechanism.

Here, the precision of the position of the center of the rotating shaft of the rotating machine can be ensured relatively easily.

A method for producing a compressor pertaining to a tenth invention is the method for producing a compressor pertaining to the seventh invention or the eighth invention, wherein the compressor is a rotary type compressor and is disposed with a cylinder member and a compression mechanism that includes a head member that blocks an opening in the cylinder member. Further, the inside part is the cylinder member or the head member.

Here, the precision and the like of the relative positions of the cylinder member and the head member, which are configural parts of the compression mechanism, can be ensured relatively easily, and vibration of the compressor and the amount of wear of each of the parts of the compression mechanism can be kept within the range of predetermined design values.

A method for producing a compressor pertaining to an eleventh invention is the method for producing a compressor pertaining to the tenth invention, wherein the inside part is the cylinder member or the head member that is molded by semi-molten/semi-solid die casting.

Here, the members can be molded in a near-net shape by semi-molten/semi-solid die casting, there is little machining such as cutting, and the welding strength becomes higher than that of FC material.

A method for producing a compressor pertaining to a twelfth invention is the method for producing a compressor pertaining to the tenth invention or the eleventh invention, wherein the compressor is further disposed with a rotating machine that rotates a rotor that eccentrically rotates in a space that is formed by the cylinder member and the head member. The head member includes a first head member that is positioned on the rotating machine side of the cylinder member and a second head member that faces the first head member with the cylinder member being interposed therebetween. The inside part is the second head member. Additionally, in the laser welding step, the laser light is applied, from the opposite side of the side where the rotating machine is present, to the portion where the first portion of the casing and the second portion of the second head member face each other.

Here, the rotating machine is present on one side (the first head member side when seen from the cylinder member) of the compression mechanism that includes the cylinder member, the first head member and the second head member, but because application of the laser light is performed from the opposite side (the second head member side when seen from the cylinder member), there becomes less potential for the rotating machine to hinder laser welding.

A method for producing a compressor pertaining to a thirteenth invention is the method for producing a compressor pertaining to any of the seventh invention to the twelfth invention, wherein in the laser welding step, the laser light is applied at an angle that is equal to or less than 30 degrees with respect to the inner surface of the casing.

A method for producing a compressor pertaining to a fourteenth invention is the method for producing a compressor pertaining to any of the seventh invention to the thirteenth invention, wherein in the laser welding step, the laser light is applied with respect to the portion where the first portion and the second portion face each other across the entire circumference thereof.

Here, laser welding is performed across the entire circumference, so even when the compressor is used in a refrigeration machine that uses CO₂ as refrigerant and the internal pressure becomes extremely high, there is virtually no potential for the inside part to come off of the casing.

A compressor pertaining a fifteenth invention is produced by the method for producing a compressor pertaining to any of the first invention to the fourteenth invention and compresses carbon dioxide.

When high-pressure refrigerant such as carbon dioxide is used as refrigerant, relatively large pressure deformation ends up arising in a conventional casing, so a thicker casing is needed. Incidentally, when the inside part is fastened by arc welding where a through hole is formed in this thick casing and a welding filler is used via that through hole as has conventionally been the case, there is the potential for the amount of heat input to the casing to become large in comparison to in the case of a conventional casing and for the casing to end up becoming greatly distorted. However, in the method for producing a compressor pertaining to any of the first invention to the fourteenth invention, the inside part is fastened to the casing by a laser beam whose energy density is high. For this reason, even with a compressor for high-pressure refrigerant where a thick casing is needed, distortion of the casing can be controlled during fastening of the inside part.

A method for producing a compressor pertaining to a sixteenth invention comprises an aligning step and a laser welding step. The compressor is disposed with a casing. The casing includes a cylindrical body portion casing and end portion casings that are welded to end portions of the body portion casing so as to be airtight. In the aligning step, the body portion casing and the end portion casings are aligned. In the laser welding step, the body portion casing is laser-welded to the end portion casings along a circumferential direction of the body portion casing while a welding filler is supplied.

In this method for producing a compressor, in the aligning step, the body portion casing of the compressor and the end portion casings of the compressor are aligned. Additionally, in the next laser welding step, the laser is applied to the body portion casing and the end portion casings that have been aligned in the aligning step. In this manner, in this method for producing a compressor, laser welding is used in the welding of the body portion casing and the end portion casings, so heat affects resulting from welding are controlled in comparison to when arc welding is used, and a low-distortion compressor can be provided. Further, during laser welding of the body portion casing and the end portion casings, a welding filler is used, so a sufficient throat thickness becomes ensured in the melting site, and the welding strength of the body portion casing and the end portion casings can be sufficiently ensured.

A method for producing a compressor pertaining to a seventeenth invention is the method for producing a compressor pertaining to the sixteenth invention, wherein in the laser welding step, the body portion casing is fillet-welded to the end portion casings.

In this method for producing a compressor, the body portion casing and the end portion casings are fillet-welded together. In this manner, when fillet-welding is used, the welding quality can be judged by visual inspection.

A method for producing a compressor pertaining to an eighteenth invention is the method for producing a compressor pertaining to the sixteenth invention, wherein in the laser welding step, the body portion casing is butt-welded to the end portion casings.

In this method for producing a compressor, the body portion casing and the end portion casings are butt-welded together. In this manner, when butt-welding is used, heat affects resulting from welding are controlled even more than when fillet-welding is used.

A compressor pertaining to a nineteenth invention is produced by the method for producing a compressor pertaining to any of the sixteenth invention to the eighteenth invention and compresses carbon dioxide.

When high-pressure refrigerant such as carbon dioxide is used as refrigerant, relatively large pressure deformation ends up arising in a conventional casing, so a thicker casing is needed. Incidentally, when these thick body portion casing and end portion casings are fastened together by arc welding, there is the potential for the amount of heat input to both of the casings to become large in comparison to in the case of a conventional casing and for the entire casing to end up becoming greatly distorted. However, in the method for producing a compressor pertaining to any of the sixteenth invention to the eighteenth invention, the body portion casing and the end portion casings are fastened together by a laser beam whose energy density is high. For this reason, even with a compressor for high-pressure refrigerant where a thick casing is needed, distortion of the casing can be controlled.

### EFFECTS OF THE INVENTION

In the method for producing a compressor pertaining to the first invention, laser welding is used in the welding of the casing and the inside part, so heat affects resulting from welding are controlled in comparison to when arc welding is used, and a low-distortion compressor can be provided. Consequently, ensuring the positional precision of the inside part becomes easy. As a result of this, ensuring the positional precision of the inside part becomes easy.

In the method for producing a compressor pertaining to the second invention, laser welding is used in the welding of the casing and the inside part, so heat affects resulting from welding are controlled in comparison to when arc welding is used, and a low-distortion compressor can be provided. As a result of this, ensuring the positional precision of the inside part becomes easy. Further, the clearance between the first portion of the casing and the second portion of the inside part is maintained greater than 0 mm and equal to or less than 0.6 mm, so the welding strength of the casing and the inside part can be sufficiently ensured. Moreover, during the welding of the casing and the inside part, it is not necessary to form a hole beforehand in the first portion, and a welding filler is also not used, so production costs can be omitted.

In the method for producing a compressor pertaining to the third invention, the clearance between the first portion of the casing and the second portion of the inside part is maintained greater than 0 mm and equal to or less than 0.2 mm, so the welding strength of the casing and the inside part can be improved.

In the method for producing a compressor pertaining to the fourth invention, in the welding step, the laser is applied such that the melting site forms an open curve, so the air-tightness of the compressor can be ensured.

In the method for producing a compressor pertaining to the fifth invention, in the welding step, the laser is applied such that the melting site forms a V, so the welding strength can be easily ensured.

In the method for producing a compressor pertaining to the sixth invention, in the welding step, the laser is applied such that the apex of the V of the melting site becomes a rounded shape, so concentration of stress in the apex of the V of the melting site can be avoided.

In the method for producing a compressor pertaining to the seventh invention, a method is employed where the laser light is directly applied from the inside of the casing to the portion where the first portion and the second portion face each other to perform laser welding, so the penetration region of both is increased with a relatively small amount of heat input and the strength of the joint portion is ensured. Additionally, because the casing and the inside part are directly welded together by laser welding, it becomes unnecessary to intervene an intermediate member such as the mounting plate that had conventionally been used, and costs can be reduced and the compressor can be made compact.

In the method for producing a compressor pertaining to the eighth invention, the casing is thick, but a method is employed where the laser light is directly applied from the inside of the casing to the portion where the first portion and the second portion face each other, so a sufficient welding region can be ensured with a small amount of heat input.

In the methods for producing a compressor pertaining to the ninth invention and the tenth invention, the precision of the position of the center of the rotating shaft of the rotating machine can be ensured relatively easily.

In the method for producing a compressor pertaining to the eleventh invention, the members can be molded in a near-net shape by semi-molten/semi-solid die casting, there is little machining such as cutting, and the welding strength becomes higher than that of FC material.

In the method for producing a compressor pertaining to the twelfth invention, the rotating machine is present on one side of the compression mechanism that includes the cylinder member, the first head member and the second head member, but because application of the laser light is performed from the opposite side, there becomes less potential for the rotating machine to hinder laser welding.

In the method for producing a compressor pertaining to the thirteenth invention, the first portion and the second portion can be laser-welded together in a wide area.

In the method for producing a compressor pertaining to the fourteenth invention, laser welding is performed across the entire circumference, so even when the compressor is used in a refrigeration machine that uses CO₂ as refrigerant and the internal pressure becomes extremely high, there is virtually no potential for the inside part to come off of the casing.

In the compressor pertaining to the fifteenth invention, a thick casing where distortion is controlled can be employed.

In the method for producing a compressor pertaining to the sixteenth invention, laser welding is used in the welding of the body portion casing and the end portion casings, so heat affects resulting from welding are controlled in comparison to when arc welding is used, and a low-distortion compressor can be provided. Further, during laser welding of the body portion casing and the end portion casings, a welding filler is used, so a sufficient throat thickness becomes ensured in the melting site, and the welding strength of the body portion casing and the end portion casings can be sufficiently ensured.

In the method for producing a compressor pertaining to the seventeenth invention, the body portion casing and the end portion casings are fillet-welded together, so the welding quality can be judged by visual inspection.

In the method for producing a compressor pertaining to the eighteenth invention, the body portion casing and the end portion casings are butt-welded together, so heat affects resulting from welding are controlled even more than when fillet-welding is used.

In the compressor pertaining to the nineteenth invention, a thick casing where distortion is controlled can be employed.

### BRIEF DESCRIPTION OF THE DRAWINGS

FIG. 1 is a longitudinal sectional view of a high-low pressure dome type compressor pertaining to a first embodiment.
FIG. 2 is an enlarged view of the vicinity of a melting site resulting from laser welding of a body portion casing and a lower main bearing in the longitudinal sectional view of the high-low pressure dome type compressor pertaining to the first embodiment.
FIG. 3 is a view where a welding surface portion of the body portion casing pertaining to the first embodiment is seen from a direction in which laser light is applied.

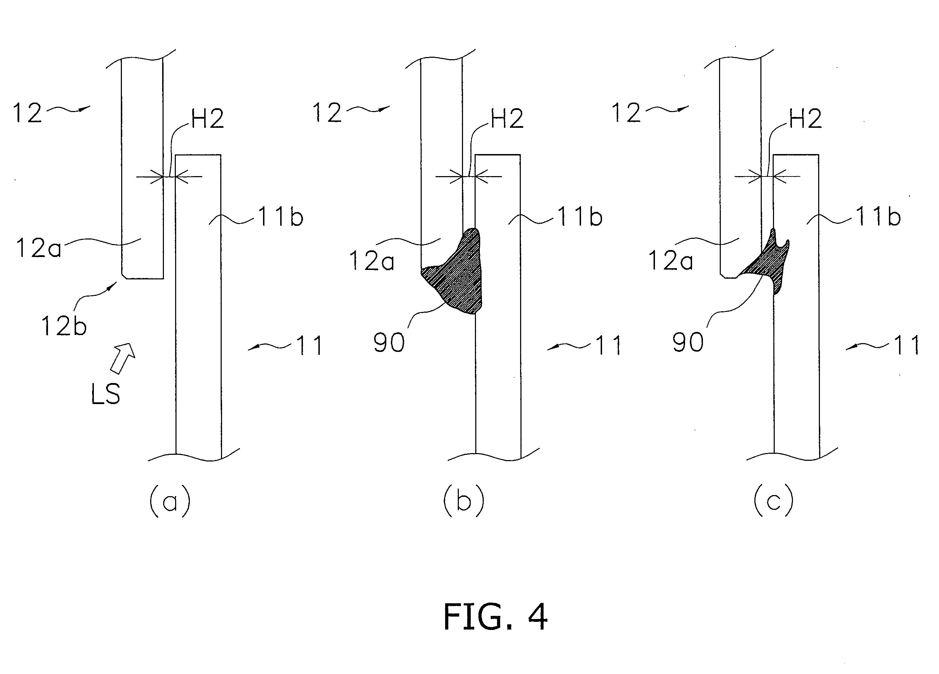

FIG. 4 (a) is a longitudinal sectional view of the vicinity of a melting site before laser welding is administered to the body portion casing and an upper wall portion pertaining to the first embodiment. (b) is a longitudinal sectional view of the vicinity of the melting site pertaining to the first embodiment after supply of a welding filler has been received and laser welding has been administered to the body portion casing and the upper wall portion. (c) is a longitudinal sectional view of the vicinity of the melting site pertaining to the conventional technique after supply of a welding filler is not received and laser welding has been administered to the body portion casing and the upper wall portion.

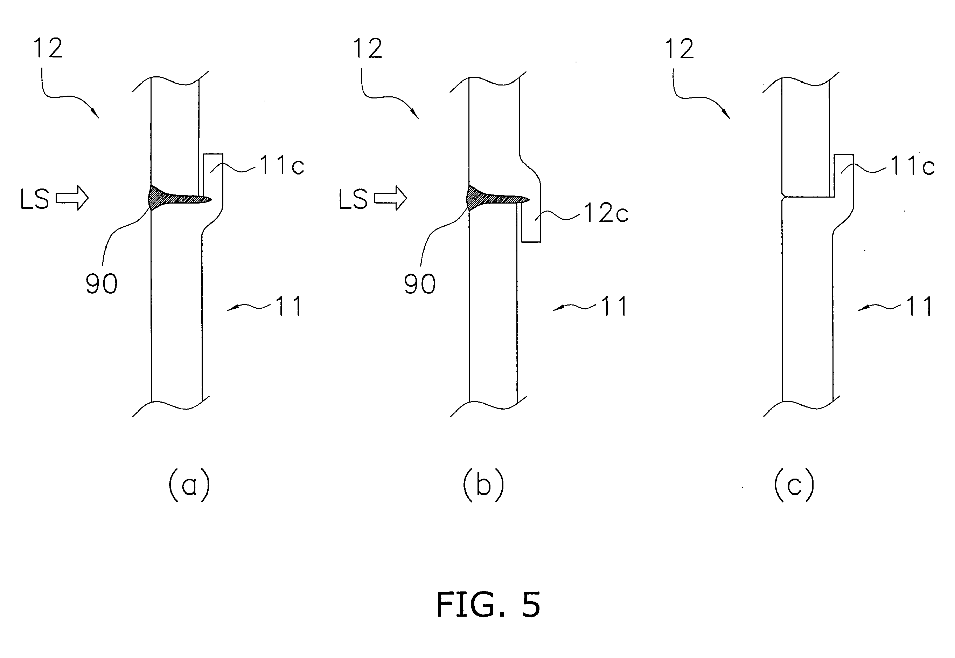

FIG. 5 (a) is a longitudinal sectional view of the vicinity of a melting site pertaining to a modified example (H) of the first embodiment after laser welding has been administered to the body portion casing and the upper wall portion. (b) is a longitudinal sectional view of the vicinity of the melting site after laser welding has been administered to the body portion casing and the upper wall portion pertaining to the modified example (H) of the first embodiment. (c) is a longitudinal sectional view of the melting site before laser welding is administered to the body portion casing and the upper wall portion pertaining to the modified example (H) of the first embodiment.
FIG. 6 is an enlarged view of a joint portion between a lower main bearing and a body casing portion pertaining to a second embodiment.
FIG. 7 is a longitudinal sectional view of a swing compressor pertaining to a third embodiment.
FIG. 8 is a cross-sectional view, seen along arrows IV-IV, of the swing compressor pertaining to the third embodiment.
FIG. 9 is an enlarged view of a joint portion between a rear head of a swing compression mechanism and a body casing portion pertaining to the third embodiment.

### DESCRIPTION OF THE REFERENCE NUMERALS

- 1: High-Low Pressure Dome Type Scroll Compressor (Compressor)
- 10: Casing
- 11, 111: Body Portion Casing (Casing)
- 11a: Welding Surface Portion (First Portion)
- 11s, 111s: Inner Surface
- 11w, 111w: Welded Portion (First Portion) of Inner Surface of Body Casing Portion
- 12: Upper Wall Portion (End Portion Casing)
- 13: Bottom Wall Portion (End Portion Casing)
- 16: Drive Motor (Rotating Machine)
- 17: Drive Shaft (Rotating Shaft)
- 60: Lower Main Bearing (Inside Part, Bearing)
- 60a: Welding Surface Portion (Second Portion)
- 61: Outer Peripheral Portion (Second Portion) of Lower Main Bearing
- 70: Melting Site
- 101: Rotary Type (Swing Type) Compressor
- 115: Swing Compression Mechanism (Compression Mechanism)
- 116: Drive Motor (Rotating Machine)
- 121: Piston (Rotor)
- 123: Front Head (First Head Member)
- 124: First Cylinder Block (Cylinder Member)
- 125: Rear Head (Second Head Member)
- 125b: Outer Peripheral Portion (Second Portion) of Rear Head
- 126: Second Cylinder Block (Cylinder Member)
- 127: Middle Plate (Head Member)

### BEST MODE FOR CARRYING OUT THE INVENTION

### -- First Embodiment --

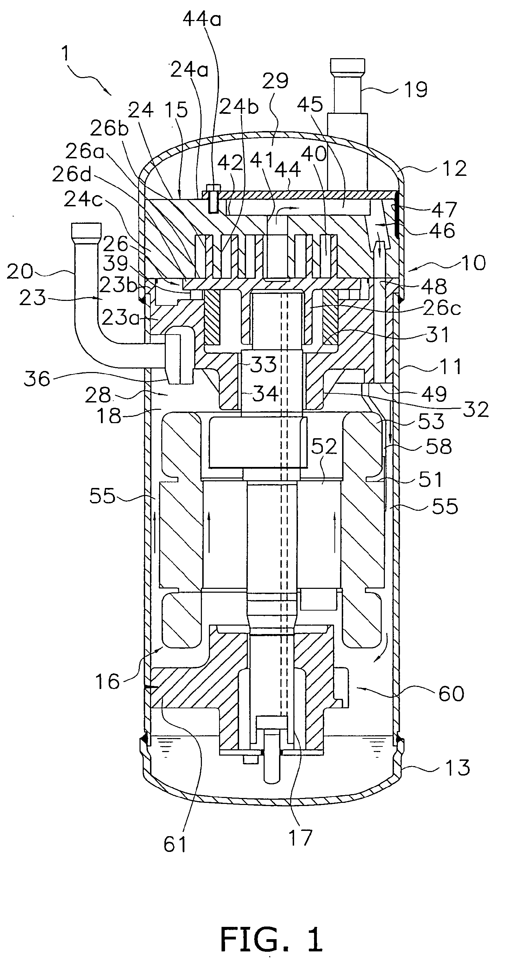

A high-low pressure dome type scroll compressor 1 pertaining to a first embodiment of the present invention configures a refrigerant circuit together with an evaporator, a condenser and an expansion mechanism, and fulfills the role of compressing gas refrigerant in that refrigerant circuit. As shown in FIG. 1, the high-low pressure dome type scroll compressor 1 is mainly configured by a vertically long, circular cylinder-shaped sealed dome type casing 10, a scroll compression mechanism 15, an Oldham ring 39, a drive motor 16, a lower main bearing 60, a suction pipe 19 and a discharge pipe 20. Below, the configural parts of this high-low pressure dome type scroll compressor 1 will be described in detail.

### <Details of Configural Parts of High-Low Pressure Dome Type Scroll Compressor>

### (1) Casing

The casing 10 includes a substantially circular cylinder-shaped body portion casing 11, a bowl-shaped upper wall portion 12 that is welded to the upper end portion of the body portion casing 11 so as to be airtight, and a bowl-shaped bottom wall portion 13 that is welded to the lower end portion of the body portion casing 11 so as to be airtight. It will be noted that the details of the method of welding the body portion casing 11 to the upper wall portion 12 and the bottom wall portion 13 will be described later. Additionally, mainly housed in this casing 10 are the scroll compression mechanism 15, which compresses gas refrigerant, and the drive motor 16, which is disposed below the scroll compression mechanism 15. The scroll compression mechanism 15 and the drive motor 16 are coupled together by a drive shaft 17 that is disposed so as to extend in a vertical direction inside the casing 10. Additionally, as a result of this, a space 18 arises between the scroll compression mechanism 15 and the drive motor 16.

### (2) Scroll Compression Mechanism

The scroll compression mechanism 15 is, as shown in FIG. 1, mainly configured by a housing 23, a fixed scroll 24 that is disposed in tight contact with the upper side of the housing 23, and a movable scroll 26 that meshes with the fixed scroll 24. Below, the configural parts of this scroll compression mechanism 15 will be described in detail.

### a) Housing

The housing 23 is mainly configured by a plate portion 23a and a first outer peripheral wall 23b that is disposed upright from the outer peripheral surface of the plate portion. Additionally, this housing 23 is press-fitted and fixed to the body portion casing 11 across its entirety in a circumferential direction at its outer peripheral surface. In other words, the body portion casing 11 and the housing 23 are in tight contact with each other so as to be airtight across their entire circumference. For this reason, the inside of the casing 10 becomes partitioned into a high pressure space 28 on the lower side of the housing 23 and a low pressure space 29 on the upper side of the housing 23. Further, a housing concave portion 31 that is concavely disposed in the center of the upper surface of the housing 23 and a bearing portion 32 that is disposed so as to extend downward from the center of the undersurface of the housing 23 are formed in this housing 23. Additionally, a bearing hole 33 that penetrates the bearing portion 32 in the vertical direction is formed in the bearing portion 32, and the drive shaft 17 is fitted into this bearing hole 33 such that the drive shaft 17 may freely rotate via a bearing 34.

### b) Fixed Scroll

The fixed scroll 24 is mainly configured by an end plate 24a, a scroll (involute) wrap 24b that extends downward from the end plate 24a, and a second outer peripheral wall 24c that surrounds the wrap 24b. A discharge passage 41 that is communicated with a compression chamber 40 (described later) and an enlarged concave portion 42 that is communicated with the discharge passage 41 are formed in the end plate 24a. The discharge passage 41 is formed so as to extend in the vertical direction in the center portion of the end plate 24a. The enlarged concave portion 42 is continuous with a discharge hole 41 and forms a space that is enlarged more than the discharge hole 41, and is a concave portion that is formed so as to widen in a horizontal direction in the upper surface of the end plate 24a. Additionally, a cover body 44 is fastened and fixed to the fixed scroll 24 by a bolt so as to cover the top of this enlarged concave portion 42. Additionally, the cover body 44 covers the enlarged concave portion 42, whereby a muffler space 45 that silences the operating noise of the scroll compression mechanism 15 is formed. The fixed scroll 24 and the cover body 44 are brought into tight contact with each other via unillustrated packing and are thereby sealed.

### c) Movable Scroll

The movable scroll 26 is mainly configured by an end plate 26a, a scroll (involute) wrap 26b that extends upward from the end plate 26a, a bearing portion 26c that extends downward of the end plate 26a, and a groove portion 26d that is formed in both end portions of the end plate 26a. Additionally, the Oldham ring 39 is fitted into the groove portion 26d, whereby this movable scroll 26 is supported on the housing 23. Further, the upper end of the drive shaft 17 is fitted into the bearing portion 26c. The movable scroll 26 is built into the scroll compression mechanism 15 in this state, whereby the movable scroll 26 revolves inside the housing 23 without self-rotating by the rotation of the drive shaft 17. Further, the wrap 26b of the movable scroll 26 is caused to mesh with the wrap 24b of the fixed scroll 24, and the compression chamber 40 is formed between contact portions of both of the wraps 24b and 26b. Additionally, the contact portions of both of the wraps 24b and 26b move toward the center in accompaniment with the revolution of the movable scroll 26, so the compression chamber 40 also moves toward the center in accompaniment with the revolution of the movable scroll 26. At this time, the volume of the compression chamber 40 is contracted toward the center. In the high-low pressure dome type scroll compressor 1 pertaining to the first embodiment, gas refrigerant becomes compressed in this manner.

### d) Other

Further, a communication passage 46 is formed in this scroll compression mechanism 15 across the fixed scroll 24 and the housing 23. This communication passage 46 is formed such that a scroll passage 47 that is cut out of and formed in the fixed scroll 24 and a housing passage 48 that is cut out of and formed in the housing 23 are communicated. Additionally, the upper end of the communication passage 46, that is, the upper end of the scroll passage 47, opens to the enlarged concave portion 42, and the lower end of the communication passage 46, that is, the lower end of the housing passage 48, opens to the lower end surface of the housing 23. In other words, the opening in the lower end of the housing passage 48 becomes a discharge opening 49 that allows refrigerant in the communication passage 46 to flow out to the space 18.

### (3) Oldham Ring

The Oldham ring 39 is, as mentioned above, a member for preventing self-rotation of the moyable scroll 26, and is fitted into Oldham grooves (not shown) that are formed in the housing 23. It will be noted that these Oldham grooves are oval grooves and are disposed in positions where they face each other in the housing 23.

### (4) Drive Motor

The drive motor 16 is a direct current motor in the present embodiment and is mainly configured by an annular stator 51 that is fixed to the inner wall surface of the casing 10 and a rotor 52 that is housed such that it may freely rotate with a slight clearance (air gap passage) on the inside of the stator 51. Additionally, this drive motor 16 is disposed such that the upper end of a coil end 53 that is formed on the upper side of the stator 51 is in substantially the same height position as the lower end of the bearing portion 32 of the housing 23.

A copper wire is wound around the teeth portion of the stator 51, and the coil end 53 is formed on the upper side and the lower side of the stator 51. Further, core cut portions that are cut out of and formed in plural places from the upper end surface to the lower end surface of the stator 51 and at predetermined intervals in the circumferential direction are disposed in the outer peripheral surface of the stator 51. Additionally, because of these core cut portions, a motor cooling passage 55 that extends in the vertical direction is formed between the body portion casing 11 and the stator 51. The rotor 52 is driven by and coupled to the movable scroll 26 of the scroll compression mechanism 15 via the drive shaft 17 that is disposed in the axial center of the body portion casing 11 so as to extend in the vertical direction. Further, a guide plate 58 that guides refrigerant flowing out from the discharge opening 49 of the communication passage 46 to the motor cooling passage 55 is disposed in the void space 18.

### (5) Lower Main Bearing

The lower main bearing 60 is disposed in a lower space below the drive motor 16. This lower main bearing 60 is fixed to the body portion casing 11, configures a bearing on the lower end side of the drive shaft 17, and supports the drive shaft 17. It will be noted that the details of the method of welding the body portion casing 11 to the lower main bearing 60 will be described later.

### (6) Suction Pipe

The suction pipe 19 is for guiding refrigerant in the refrigerant circuit to the scroll compression mechanism 15, and is fitted into the upper wall portion 12 of the casing 10 so as to be airtight. The suction pipe 19 penetrates the low pressure space 29 in the vertical direction, and the inner end portion of the suction pipe 19 is fitted into the fixed scroll 24.

### (7) Discharge Pipe

The discharge pipe 20 is for allowing refrigerant inside the casing 10 to be discharged to the outside of the casing 10, and is fitted into the body portion casing 11 of the casing 10 so as to be airtight. Additionally, this discharge pipe 20 includes an inner end portion 36 that is formed in a circular cylinder shape that extends in the vertical direction and is fixed to the lower end portion of the housing 23. It will be noted that the opening in the inner end of the discharge pipe 20, that is, the refrigerant inflow opening, opens downward.

### <Method of Welding Body Portion Casing to Lower Main Bearing>

In the first embodiment, the body portion casing 11 and the lower main bearing 60 are fastened together by laser welding.

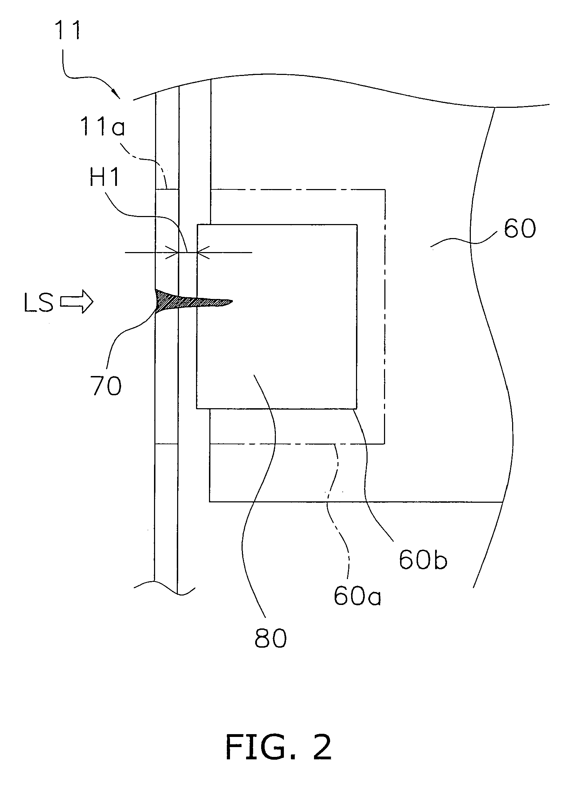

Specifically, first, the relative positions of the body portion casing 11 and the lower main bearing 60 are aligned in regard to their height direction, their circumferential direction and their radial direction so as to become the same as they are at product completion of the high-low pressure dome type scroll compressor 1. At this time, the relative positions of the body portion casing 11 and the lower main bearing 60 in their radial direction are maintained such that, as shown in FIG. 2, a clearance H1 between a welding surface portion 11a of the body portion casing 11 and a welding surface portion 60a of the lower main bearing 60 becomes greater than 0 mm and equal to or less than 0.2 mm. Further, a concave portion 60b that opens toward the welding surface portion 11a is formed in the welding surface portion 60a of the lower main bearing 60, and a welding pin 80 is press-fitted into this concave portion 60b. It will be noted that, whereas the lower main bearing 60 is formed by cast iron, the welding pin 80 is formed by a low-carbon steel that is appropriate as a welding mother material.

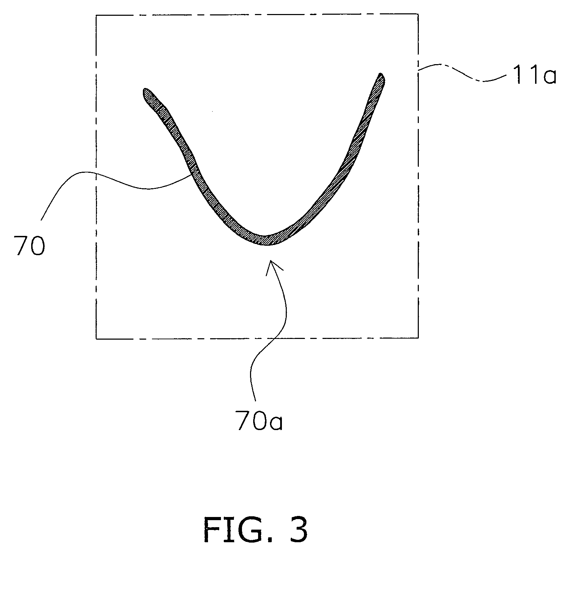

Next, in a state where the body portion casing 11 and the lower main bearing 60 have been aligned in this manner, laser light LS is applied to the welding surface portion 11a in the substantial radial direction from the outer peripheral surface side of the body portion casing 11. This laser light LS melts and welds together the body portion casing 11 and the welding pin 80 of the lower main bearing 60. It will be noted that a hole is not formed in the welding surface portion 11a before the laser light LS is applied thereto. Additionally, the light source (not shown) of the laser light LS is continuously moved so as to draw a V inside the welding surface portion 11a when seen from the radial direction, so a melting site 70 that is melted by the application of the laser light LS becomes V-shaped as shown in FIG. 3. At this time, in the vicinity of an apex 70a of the V of the melting site 70, the light source (not shown) of the laser light LS is moved such that the apex 70a of the V becomes rounded when seen from the radial direction. It will be noted that a welding filler is not used at all in the laser welding of the body portion casing 11 and the lower main bearing 60. Further, the V-shaped melting site 70 is formed in three places in the outer peripheral surface of the body portion casing 11.

### <Method of Welding Body Portion Casing to Upper Wall Portion and Bottom Wall Portion>

In the first embodiment, the body portion casing 11 and the upper wall portion 12 and the bottom wall portion 13 are fastened together by laser welding. Below, the method of laser-welding the body portion casing 11 to the upper wall portion 12 will be specifically described, but the same is true in the case of laser-welding the body portion casing 11 to the bottom wall portion 13.

First, the relative positions of the body portion casing 11 and the upper wall portion 12 are aligned in regard to their height direction, their circumferential direction and their radial direction so as to become the same as they are at product completion of the high-low pressure dome type scroll compressor 1. At this time, as shown in FIG. 4(a), an upper end portion 11b of the body portion casing 11 and a lower end portion 12a of the upper wall portion 12 are aligned such that they mutually overlap. Additionally, a clearance H2 is disposed between the upper end portion 11b and the lower end portion 12a in view of the assemblability of the body portion casing 11 and the upper wall portion 12. Further, C-chamfering is administered to an annular site 12b that is the radial direction outermost portion of the lower end portion 12a of the upper wall portion 12 and runs across the entirety in the circumferential direction of the lowermost portion in the height direction. The precision of this C-chamfering is adjusted to become equal to or less than C 0.1 across the entirety in the circumferential direction of the annular site 12b.

Next, in a state where the body portion casing 11 and the upper wall portion 12 have been aligned in this manner, the laser light LS is applied from the outer peripheral surface side of the body portion casing 11 toward the clearance H2. This laser light LS melts and welds together the upper end portion 11b of the body portion casing 11 and the lower end portion 12a of the upper wall portion 12. That is, the body portion casing 11 and the upper wall portion 12 become fillet-welded. Additionally, a welding filler is supplied in this laser-welding of the body portion casing 11 and the upper wall portion 12. Thus, as shown in FIG. 4(b), even when the melted metal flows into the clearance H2, a sufficient throat thickness becomes ensured in a melting site 90. It will be noted that, as a reference, FIG. 4(c) shows the vicinity of the end portions 11b and 12a when they have been laser-welded together without a welding filler being supplied thereto. Further, the light source (not shown) of the laser light LS is continuously moved so as to draw an annular trajectory across the entirety in the circumferential direction, so the melting site 90 that is melted by the application of the laser light LS is annularly formed. At this time, the chamfer ridgeline that has been annularly formed in the annular site 12b is tracked by a camera, the application position of the laser light LS is adjusted using this chamfer ridgeline as a reference line.

### <Operation of High-Low Pressure Dome Type Scroll Compressor>

When the drive motor 16 is driven, the drive shaft 17 rotates and the movable scroll 26 revolves without self-rotating. When this happens, low-pressure gas refrigerant is sucked through the suction pipe 19 and into the compression chamber 40 from the peripheral edge side of the compression chamber 40, is compressed in accompaniment with the change in the volume of the compression chamber 40, and becomes high-pressure gas refrigerant. Then, this high-pressure gas refrigerant is discharged from the center portion of the compression chamber 40 through the discharge passage 41 into the muffler space 45, thereafter flows through the communication passage 46, the scroll passage 47, the housing passage 48 and the discharge opening 49 into the space 18, and flows downward between the guide plate 58 and the inner surface of the body portion casing 11. Then, when this gas refrigerant flows downward between the guide plate 58 and the inner surface of the body portion casing 11, some of the gas refrigerant branches and flows in the circumferential direction between the guide plate 58 and the drive motor 16. It will be noted that, at this time, lubricating oil that is mixed in with the gas refrigerant is separated. Meanwhile, the other part of the gas refrigerant that has branched flows downward through the motor cooling passage 55, flows to the lower space below the drive motor 16, reverses, and flows upward through the air gap passage between the stator 51 and the rotor 52 or through the motor cooling passage 55 on the side facing the communication passage 46 (the left side in FIG. 1). Thereafter, the gas refrigerant passing the guide plate 58 and the gas refrigerant flowing through the air gap passage or the motor cooling passage 55 merge together in the space 18 and flow into the discharge pipe 20 from the inner end portion 36 of the discharge pipe 20, and the gas refrigerant is discharged to the outside of the casing 10. Then, the gas refrigerant that has been discharged to the outside of the casing 10 circulates through the refrigerant circuit and is thereafter again sucked into the scroll compression mechanism 15 through the suction pipe 19 and compressed.

### <Characteristics of High-Low Pressure Dome Type Scroll Compressor>

(1) In the process of producing the high-low pressure dome type scroll compressor 1 pertaining to the first embodiment, laser welding is used in the welding of the body portion casing 11 and the lower main bearing 60. Thus, heat affects resulting from welding are minimized in comparison to when arc welding is used as has conventionally been the case, and distortion of the casing 10 is controlled. Further, even with a thick casing that is prepared for high-pressure refrigerant such as carbon dioxide, the lower main bearing 60 can be fastened without imparting distortion.
   When the present invention is applied to a compressor that includes bearings above and below, the present invention prevents shifting of the shafts resulting from distortion of the casing, and when the present invention is applied to a compressor that includes a cantilever bearing, the present invention prevents shifting of the relative positions of the stator 51 and the rotor 52.
(2) In the process of producing the high-low pressure dome type scroll compressor 1 pertaining to the first embodiment, the clearance H1 between the welding surface portion 11a of the body portion casing 11 and the welding surface portion 60a of the lower main bearing 60 is maintained greater than 0 mm and equal to or less than 0.2 mm. Thus, the laser welding strength of the body portion casing 11 and the lower main bearing 60 becomes sufficiently ensured.
(3) In the process of producing the high-low pressure dome type scroll compressor 1 pertaining to the first embodiment, during welding of the body portion casing 11 and the lower main bearing 60, it is not necessary to form a hole beforehand in the welding surface portion 11a of the body portion casing 11. When arc welding is used, as has conventionally been the case, it is necessary to form a hole beforehand in the welding surface portion 11a. In this case, the hole that has been formed is filled during welding, so the necessity that the welding position be minutely adjusted arises. For this reason, in the first embodiment, where laser welding is used, the work of welding becomes easier than has conventionally been the case.
(4) In the process of producing the high-low pressure dome type scroll compressor 1 pertaining to the first embodiment, a welding filler is not used during the welding of the body portion casing 11 and the lower main bearing 60. Thus, the work of welding becomes easy and the production costs are also reduced.
(5) In the process of producing the high-low pressure dome type scroll compressor 1 pertaining to the first embodiment, the melting site 70 that is formed by the welding of the body portion casing 11 and the lower main bearing 60 becomes V-shaped when seen from the radial direction. Further, at this time, the apex 70a of the V of the melting site 70 becomes a rounded shape. For this reason, the welding worker can easily draw the trajectory of the laser light LS for forming the melting site 70 and can form the welding site 70, which is resistant to pressure from the directions of up, down, right and left and where concentration of stress in an arbitrary place is avoided.
(6) In the first embodiment, welding is performed across the entirety in the circumferential direction of the body portion casing 11, but when the welding site runs wide in this manner, it is easy for heat affects overall to become excessive. Particularly in a compressor where high-pressure refrigerant, such as R410a or CO₂, is used, an improvement in the pressure-resistance strength of the sealed casing is demanded, so there is a tendency for the plate thickness of the casing to increase. When arc welding is used under such a condition, the welding speed must be lowered or double or triple welding becomes necessary in order to sufficiently ensure the leg length of the welding site, and heat affects overall increase even more.
   Thus, in the process of producing the high-low pressure dome type scroll compressor 1 pertaining to the first embodiment, laser welding is used in the welding of the body portion casing 11 to the upper wall portion 12 and the bottom wall portion 13. Thus, heat affects resulting from welding are minimized in comparison to when arc welding is used, as has conventionally been the case, and distortion of the casing 10 is controlled.
(7) In the high-low pressure dome type scroll compressor 1 pertaining to the first embodiment, the clearance H2 is disposed between the upper end portion 11b and the lower end portion 12a in view of the assemblability of the body portion casing 11 and the upper wall portion 12. In this case, as shown in FIG. 4(c), the metal to which the laser light LS has been applied and which has melted ends up entering this clearance H2.
   Thus, in the process of producing the high-low pressure dome type scroll compressor 1 pertaining to the first embodiment, during laser-welding of the body portion casing 11 to the upper wall portion 12 and the bottom wall portion 13, a welding filler is used. Thus, even when the melted metal flows into the clearance H2, a sufficient throat thickness becomes ensured in the melting site 90.
(8) In the process of producing the high-low pressure dome type scroll compressor 1 pertaining to the first embodiment, during laser-welding of the body portion casing 11 to the upper wall portion 12 and the bottom wall portion 13, fillet-welding is used. Thus, the welding quality becomes capable of being judged by visual inspection.

### <Modifications of First Embodiment>

(A) In the first embodiment, the sealed type high-low pressure dome type scroll compressor 1 pertaining to the first embodiment was employed, but the compressor may also be a high pressure dome type compressor or a low pressure dome type compressor. Further, the compressor may also be a semi-sealed type or an open type compressor.
(B) In the high-low pressure dome type scroll compressor 1 pertaining to the first embodiment, the scroll compression mechanism 15 was employed, but the compression mechanism may also be a rotary compression mechanism, a reciprocating compression mechanism or a screw compression mechanism. Further, the scroll compression mechanism 15 may also be a double toothed or co-rotating type of scroll.
(C) In the high-low pressure dome type scroll compressor 1 pertaining to the first embodiment, the Oldham ring 39 was employed as a self-rotation preventing mechanism, but a pin, a ball cupling, or a crank may also be employed as the self-rotation preventing mechanism.
(D) In the first embodiment, a case where the high-low pressure dome type scroll compressor 1 is used inside a refrigerant circuit has been cited as an example, but its purpose is not limited to being for air-conditioning and it may also be a compressor, a blower, a supercharger or a pump that is used by itself or incorporated in a system.
(E) In the high-low pressure dome type scroll compressor 1 pertaining to the first embodiment, lubricating oil was present, but the compressor may also be an oil-less or oil-free (it is alright whether or not there is oil) type of compressor, blower, supercharger or pump.
(F) In the high-low pressure dome type scroll compressor 1 pertaining to the first embodiment, the clearance H1 between the welding surface portion 11a of the body portion casing 11 and the welding surface portion 60a of the lower main bearing 60 was maintained greater than 0 mm and equal to or less than 0.2 mm. However, it suffices as long as the clearance H1 is maintained greater than 0 mm and equal to or less than 0.6 mm. This is because the welding strength of the body portion casing 11 and the lower main bearing 60 drops drastically when the clearance H1 exceeds 0.6 mm.
(G) In the high-low pressure dome type scroll compressor 1 pertaining to the first embodiment, the V-shaped melting site 70 is formed in three places in the outer peripheral surface of the body portion casing 11, but the V-shaped melting site 70 may also be formed in four or more places. Further, the V-shaped melting site 70 may also be formed in just one place or in two places. It will be noted that when the V-shaped melting site 70 is formed in plural places, it is formed across the circumferential direction or the height direction, or across the circumferential direction and the height direction, in the outer peripheral surface of the body portion casing 11.
   (H) In the high-low pressure dome type scroll compressor 1 pertaining to the first embodiment, the body portion casing 11 and the upper wall portion 12 were fillet-welded together, but they may also be butt-welded together. When butt-welding is used, there is the advantage that heat affects resulting from welding are reduced even more than when fillet-welding is used.

In this case, for example, as shown in FIG. 5(a) and FIG. 5(b), the body portion casing 11 or the upper wall portion 12 is given a stepped shape, and a droplet prevention wall 11c may be disposed on the body portion casing 11 or a droplet prevention wall 12c may be disposed on the upper wall portion 12. These droplet prevention walls 11c and 12c fulfill the role of a backing metal in laser welding and can prevent droplets from dropping and becoming mixed inside the compressor. Further, in this modification, the function that the droplet prevention walls 11c and 12c fulfill may also be played by part of the inside part. For example, a droplet prevention wall may also be disposed in the housing 23 that faces the annular melting site 90 across the entirety in the circumferential direction, or a new annular member may also be introduced such that it follows the annular melting site 90.

Further, in this case, as shown in FIG. 5(c), C-chamfering (e.g., C 0.1 or less) may also be administered to the laser light LS light source side of the site where the body portion casing 11 and the upper wall portion 12 abut against each other. At this time, this chamfer ridgeline that has been annularly formed is tracked by a camera, whereby the application position of the laser light LS is adjusted using this chamfer ridgeline as a reference line.

The same is also true in the case of welding the body portion casing 11 to the bottom wall portion 13.

### -- Second Embodiment --

A high-low pressure dome type scroll compressor pertaining to a second embodiment has the same structure as that of the high-low pressure dome type scroll compressor pertaining 1 to the first embodiment, but the method of welding the body portion casing to the lower main bearing and the like are different. For this reason, here, the method of welding the body portion casing to the lower main bearing will be mainly described.

It will be noted that the high-low pressure dome type scroll compressor pertaining to the second embodiment is designed assuming that CO₂ (carbon dioxide) is used as the target gas refrigerant to be compressed, and high resistance to pressure becomes necessary, so the plate thickness of a body casing portion 11, an upper wall casing portion 12 and a bottom wall casing portion 13 is set to 8 to 10 mm, which is much thicker in comparison to the thickness (3 to 4 mm) of the casing of a compressor for refrigerant such as ordinary R410A.

### <Method of Producing Lower Main Bearing>

### (1) Material

The iron material that is the raw material of the lower main bearing 60 is a billet to which the following have been added: C at 2.3 to 2.4% by weight, Si at 1.95 to 2.05% by weight, Mn at 0.6 to 0.7% by weight, P at less than 0.035% by weight, S at less than 0.04% by weight, Cr at 0.00 to 0.50% by weight, and Ni at 0.50 to 1.00% by weight. The weight percentages mentioned here are percentages with respect to the total weight. Further, a "billet" means a material before final molding that has been molded in a circular cylinder shape or the like by a continuous caster after the iron material of the above-described components has been melted in a furnace. It will be noted that, here, the contained amounts of C and Si are determined so as to satisfy both of: tensile strength and modulus of elongation becoming higher than flake graphite cast iron, and being disposed with a fluidity that is appropriate for molding sliding part bases of complex shapes. Further, the contained amount of Ni is determined so as to improve the toughness of the metal structure and to become a metal structure that is appropriate for preventing surfaces cracks during molding.

### (2) Semi-Molten Die Cast Molding

Using the above-described iron material, the lower main bearing 60 is molded by a semi-molten die cast molding method, which is one type of die casting.

In the semi-molten die cast molding process, first, the billet is placed in a semi-molten state by high-frequency heating. Next, when the billet in that semi-molten state is inserted into a mold, predetermined pressure is applied by a die cast machine to mold the billet into a desired shape. Then, the molded body is removed from the mold and quickly cooled, whereby the metal structure thereof becomes white iron overall. Thereafter, when a heat treatment is administered, the metal structure of this lower main bearing 60 changes from a white iron structure to a metal structure comprising a pearlite/ferrite base and granular graphite.

### (3) Machining

The lower main bearing 60 that has been molded by the above-described semi-molten die cast molding method is further machined, whereby it takes its final shape built into the compressor 1.

### <Fixing of Lower Main Bearing and Body Casing Portion>

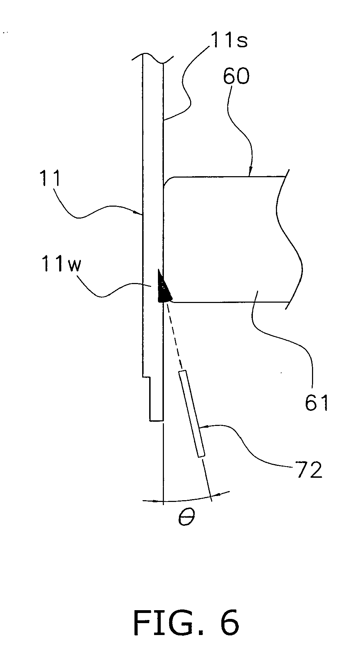

An outer peripheral portion 61 of the lower main bearing 60 and the body casing portion 11, which adjoin each other, are laser-welded together as shown in FIG. 6. Specifically, the lower portion of the outer peripheral portion 61 and a welded portion 11w of the body casing portion 11 that faces the lower portion of the outer peripheral portion 61 are placed in a state where they face each other (a state where they contact each other) and laser light is applied to that portion where they face each other from a laser light application component 72 of a laser welder (the body is not shown), whereby laser welding is performed. Here, the laser light that is applied from the laser light application component 72 is applied so as to follow the inner surface 11s of the body casing portion 11 -- specifically, the laser light is applied at a small angle θ (see angle θ in FIG. 6) of about 5 to 20° with respect to the inner surface 11s of the body casing portion 11. For this reason, as for the outer peripheral portion 61 of the lower main bearing 60 and the welded portion 11w of the body casing portion 11, a penetration region of the joint portion can be largely ensured with a relatively small amount of heat input. Further, in addition to the fact that laser welding is employed, the laser light is directly applied to the joint portion such that the laser light follows the inner surface 11s of the body casing portion 11, so the amount of heat that is inputted to the lower main bearing 60 can be reduced, almost no distortion occurs in the lower main bearing 60, and drawbacks such as the axial center of the drive shaft 17 shifting can be avoided.

It will be noted that when the lower portion of the outer peripheral portion 61 and the welded portion 11w of the body casing portion 11 that faces the lower portion of the outer peripheral portion 61 are placed in a state where they face each other, the outer peripheral portion 61 of the lower main bearing 60 is inserted with respect to the body casing portion 11 with a slight clearance. Thus, the lower portion of the outer peripheral portion 61 and the welded portion 11w face each other with a slight clearance being interposed therebetween. The reason that a slight clearance is disposed between both in this manner is to align the center of the body casing portion 11 and the center of the lower main bearing 60.

### <Characteristics of Compressor>

(1) In the scroll type compressor 1 pertaining to the second embodiment, rather than welding together the body casing portion 11 and the lower main bearing 60 by arc welding as has conventionally been the case, the joining together of both is performed by laser welding.
   In a method where the laser light is applied from the outside of the casing 10 such that the laser penetrates the body casing portion 11, the penetration region of the body casing portion 11 and the lower main bearing 60 ends up becoming small unless time is taken to ensure a large amount of heat input because the body casing portion 11 has a plate thickness that is equal to or greater than 5 mm (here, 8 to 10 mm). On the other hand, when the amount of heat input is increased, ensuring the positional precision of the lower main bearing 60 becomes difficult because of distortion that occurs in the body casing portion 11 and the like.
   In light of this, in the compressor 1, the laser light is directly applied at the angle 0 along the inner surface 11s of the body casing portion 11 with respect to the portion where the welded portion 11w of the inner surface 11s of the body casing portion 11 and the lower portion of the outer peripheral portion 61 of the lower main bearing 60 face each other. In this manner, a method is employed where the laser light is directly applied from the inside of the casing 10 to the portion where the welded portion 11w and the outer peripheral portion 61 face each other to perform laser welding, so the penetration region of both is increased with a relatively small amount of heat input and the strength of the joint portion is ensured.
   It will be noted that, when the amount of heat input is the same, in comparison to a method where the laser light is applied from the outside of the casing 10, penetrates the body casing portion 11 and welds the lower main bearing 60 to the body casing portion 11, the strength of the joint portion becomes higher when the above-described method, where the laser light is directly applied to the portion where the lower main bearing 60 and the body casing portion 11 face each other, is employed.
(2) The effect of heat input amount reduction resulting from employing a method where, as described above in (1), the laser light is directly applied from the inside of the casing 10 to the portion where the welded portion 11w and the outer peripheral portion 61 face each other to perform laser welding rather than a method where the laser light is applied from the outside of the casing 10, penetrates the body casing portion 11 and welds the lower main bearing 60 works extremely effectively when the plate thickness of the body casing portion 11 is equal to or greater than 5 mm and particularly when the plate thickness of the body casing portion 11 exceeds 7 mm. This is because, in a case where the plate thickness of the body casing portion 11 is 8 to 10 mm as in the compressor 1, when the laser light is applied from the outside of the casing 10 to perform laser welding, a large amount of heat must enter the lower main bearing 60 in order to sufficiently ensure the penetration region of the body casing portion 11 and the lower main bearing 60, distortion occurs, and ensuring the precision of the axial center becomes difficult.

### -- Third Embodiment --

### <General Configuration of Compressor>

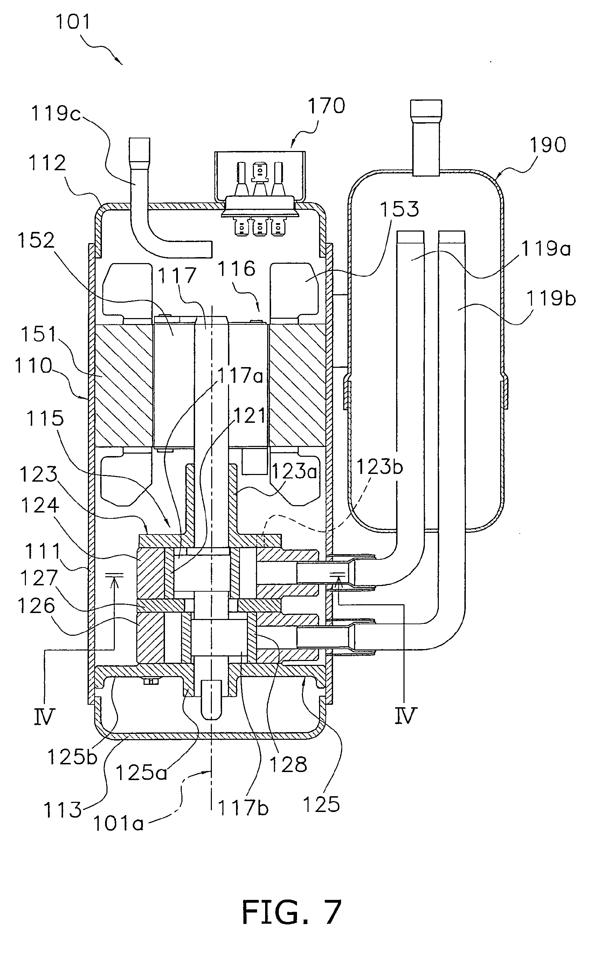

A rotary type (more specifically, a swing type) compressor 101 pertaining to a third embodiment of the present invention is, as shown in FIG. 7, mainly configured by a sealed dome type casing 110, a swing compression mechanism 115, a drive motor 116, suction pipes 119a and 119b, and a discharge pipe 119c. An accumulator (gas-liquid separator) 190 is attached to the casing 110 in this swing compressor 101.

It will be noted that the compressor 101 is designed assuming that CO₂ (carbon dioxide) is used as the target gas refrigerant to be compressed.

### (1) Casing

The casing 110 includes a substantially circular cylinder-shaped body casing portion 111, a bowl-shaped upper wall casing portion 112 that is welded to the upper end portion of the body casing portion 111 so as to be airtight, and a bowl-shaped bottom wall casing portion 113 that is welded to the lower end portion of the body casing portion 111 so as to be airtight. Additionally, mainly housed in this casing 110 are the swing compression mechanism 115, which compresses gas refrigerant, and the drive motor 116, which is disposed above the swing compression mechanism 115. The swing compression mechanism 115 and the drive motor 116 are coupled together by a crankshaft 117 that is disposed so as to extend in a vertical direction inside the casing 110.

It will be noted that this compressor 101 is for CO₂ refrigerant, and high resistance to pressure becomes necessary, so the plate thickness of the body casing portion 111, the upper wall casing portion 112 and the bottom wall casing portion 113 is set to 8 to 10 mm, which is much thicker in comparison to the thickness (3 to 4 mm) of the casing of a compressor for refrigerant such as ordinary R410A.

### (2) Swing Compression Mechanism

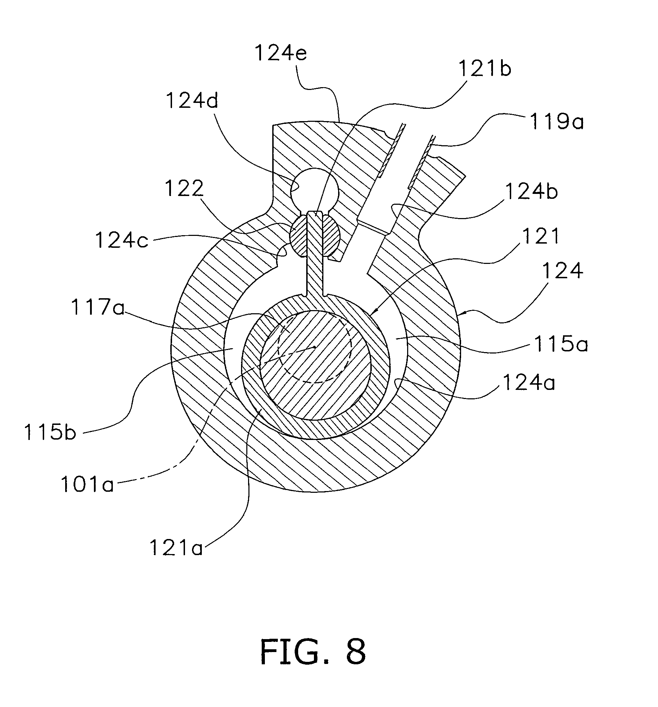

As shown in FIG. 7 and FIG. 8, the swing compression mechanism 115 is mainly configured by the crankshaft 117, pistons 121 and 128, bushes 122 and 122, a front head 123, a first cylinder block 124, a middle plate 127, a second cylinder block 126 and a rear head 125. It will be noted that, in the third embodiment, the front head 123, the first cylinder block 124, the middle plate 127, the second cylinder block 126 and the rear head 125 are integrally fastened together by plural bolts.

### a) Cylinder Blocks

The first cylinder block 124 and the second cylinder block 126 have the same configuration, so description will be performed mainly in regard to the first cylinder block 124 and description of redundant portions will be omitted in regard to the second cylinder block 126.

As shown in FIG. 8, a cylinder hole 124a, a suction hole 124b, a discharge path 124c and a blade housing hole 124d are formed in the first cylinder block 124. The cylinder hole 124a is a circular column-shaped hole that penetrates along a rotating axis 101a. The suction hole 124b penetrates from an outer peripheral surface 124e to the cylinder hole 124a. The discharge path 124c is formed as a result of part of the inner peripheral side of the circular cylinder portion that forms the cylinder hole 124a being cut out. The blade housing hole 124d is a hole for housing a blade portion 121b of the later-described piston 121 and penetrates along the plate thickness direction of the first cylinder block 124. The portion of the blade housing hole 124d on the rotating axis 101a side houses the later-described bushes 122 and slides with the bushes 122.

Additionally, in a state where an eccentric shaft portion 117a of the crankshaft 117 and a roller portion 121a of the piston 121 are housed in the cylinder hole 124a in this first cylinder block 124 and where the blade portion 121b of the piston 121 and the bushes 122 are housed in the blade housing hole 124d, the discharge path 124c is interposed between the front head 123 and the middle plate 127 so as to face the front head 123. As a result of this, a cylinder chamber is formed in the swing compression mechanism 115 between the front head 123 and the middle plate 127, and this cylinder chamber becomes partitioned by the piston 121 into a suction chamber 115a that is communicated with the suction hole 124b and a discharge chamber 115b that is communicated with the discharge path 124c.

A cylinder hole, a suction hole, a discharge path and a blade housing hole are also similarly formed in the second cylinder block 126. An eccentric shaft portion 117b of the crankshaft 117 and a roller portion of the piston 128 are housed in the cylinder hole in the second cylinder block 126 also, but their phase is shifted 180° from the eccentric shaft portion 117a and the roller portion 121a that are housed in the cylinder hole 124a in the first cylinder block 124. Further, the discharge path in the second cylinder block 126 is interposed between the middle plate 127 and the rear head 125. As a result of this, a cylinder chamber is formed in the swing compression mechanism 115 also between the middle plate 127 and the rear head 125.

### b) Crankshaft

Disposed on the lower portion of the crankshaft 117 are the eccentric shaft portion 117a, which is disposed inside of the cylinder hole 124a in the first cylinder block 124, and the eccentric shaft portion 117b, which is disposed inside of the cylinder hole in the second cylinder block 126. The two eccentric shaft portions 117a and 117b are formed such that their eccentric axes face each other with the rotating axis 101a of the crankshaft 117 being interposed therebetween. The upper portion of the crankshaft 117 is fixed to a rotor 152 of the drive motor 116.

### c) Pistons

The piston 121 that is disposed inside of the cylinder hole 124a in the first cylinder block 124 and the piston 128 that is disposed inside of the cylinder hole in the second cylinder block 126 have the same configuration. Here, description will be performed using the piston 121 as an example.

As shown in FIG. 8, the piston 121 includes the circular cylinder-shaped roller portion 121a and the blade portion 121b that projects outward in the radial direction of the roller portion 121a. It will be noted that the roller portion 121a is inserted into the cylinder hole 124a in the first cylinder block 124 in a state where the roller portion 121a has been fitted into the eccentric shaft portion 117a of the crankshaft 117. Thus, when the crankshaft 117 rotates, the roller portion 121a revolves about the rotating axis 101a of the crankshaft 117. Further, the blade portion 121b is housed in the blade housing hole 124d. Thus, the blade portion 121b moves back-and-forth with respect to the bushes 122 and the blade housing hole 124d along the longitudinal direction at the same time that the blade portion 121b swings.

### d) Bushes

The bushes 122 are disposed with respect to both the piston 121 and the piston 128, but here description will be performed using the bushes 122 that are disposed with respect to the piston 121 as an example.

The bushes 122 are a pair of substantially semicircular column-shaped members and are housed in the blade housing hole 124d in the first cylinder block 124 so as to sandwich the blade portion 121b of the piston 121.

### e) Front Head

The front head 123 is a member that covers the discharge path 124c side of the first cylinder block 124 and is fitted into the casing 110. A bearing portion 123a is formed in this front head 123, and the crankshaft 117 is inserted into this bearing portion 123a. Further, an opening 123b for guiding refrigerant gas flowing through the discharge path 124c formed in the first cylinder block 124 to the discharge pipe 119c is formed in this front head 123. Additionally, this opening 123b is closed and opened by a discharge valve (not shown) for preventing reverse flow of the refrigerant gas.

### f) Rear Head

The rear head 125 is a member that faces the front head 123 with the cylinder blocks 124 and 126 and the middle plate 127 being interposed therebetween, and covers the underside of the second cylinder block 126. A bearing portion 125a is formed in this rear head 125, and the crankshaft 117 is inserted into this bearing portion 125a. Further, the rear head 125 includes an annular outer peripheral portion 125b. The outer peripheral surface of the outer peripheral portion 125b faces an inner surface 111s of the body casing portion 111, so both surfaces face each other. As described later, the lower portion of the outer peripheral surface of the outer peripheral portion 125b of the rear head 125 and a welded portion 111w of the inner surface 111s of the body casing portion 111 that faces the lower portion of the outer peripheral surface of the outer peripheral portion 125b of the rear head 125 are joined together by laser welding.

It will be noted that, although it is not illustrated, an opening for guiding refrigerant gas flowing through the discharge path formed in the second cylinder block 126 to the discharge pipe 119c is formed in this rear head 125.

### g) Middle Plate

The middle plate 127 is disposed between the first cylinder block 124 and the second cylinder block 126 and divides the cylinder chambers formed in these above and below.

### (3) Drive Motor

The drive motor 116 is a direct current motor in the third embodiment and is mainly configured by an annular stator 151 that is fixed to the inner wall surface of the casing 110 and the rotor 152 that is housed such that it may freely rotate with a slight clearance (air gap passage) on the inside of the stator 151.

A copper wire is wound around the teeth portion (not shown) of the stator 151, and a coil end 153 is formed on the upper side and the lower side of the stator 151. Further, core cut portions (not shown) that are cut out of and formed in plural places from the upper end surface to the lower end surface of the stator 151 at predetermined intervals in the circumferential direction is disposed in the outer peripheral surface of the stator 151.

The crankshaft 117 is fixed to the rotor 152 so as to follow the rotating axis 101a.

It will be noted that the copper wire that is wound around the stator 151 of the drive motor 116 is connected to three terminal pins of a terminal 170, and electrical power is supplied.

### (4) Suction Pipes

The suction pipe 119a is disposed so as to penetrate the casing 110, with one end of the suction pipe 119a being communicated with the suction hole 124b that is formed in the first cylinder block 124 and the other end of the suction pipe 119a being communicated with the accumulator 190.

The suction pipe 119b is also disposed so as to penetrate the casing 110, with one end of the suction pipe 119b being communicated with the suction hole that is formed in the second cylinder block 126 and the other end of the suction pipe 119b being communicated with the accumulator 190.

### (5) Discharge Pipe

The discharge pipe 119c is disposed so as to penetrate the upper wall casing portion 112 of the casing 110.

### (6) Method of Producing Sliding Members

In the compressor 101 pertaining to the third embodiment, sliding members such as the pistons 121 and 128, the front head 123, the middle plate 127 and the rear head 125 are, in the same manner as the method of producing the lower main bearing 60 of the second embodiment, produced by being molded by die casting and thereafter being subjected to cutting.

### (7) Fixing of Rear Head of Swing Compression Mechanism and Body Casing Portion

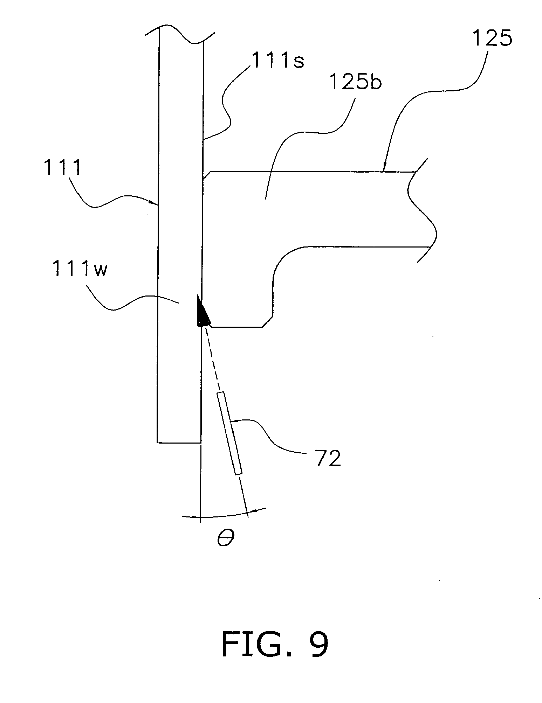

The rear head 125 of the swing compression mechanism 115 is fixed by laser welding to the body casing portion 111 as shown in FIG. 9. Specifically, the lower portion of the outer peripheral surface of the outer peripheral portion 125b of the rear head 125 and a welded portion 111w of the inner surface 111s of the body casing portion 111 that faces the lower portion of the outer peripheral surface of the outer peripheral portion 125b of the rear head 125 are placed in a state where they face each other (a state where they contact each other) and laser light is applied to that portion where they face each other from a laser light application component 72 of a laser welder (the body is not shown), whereby laser welding is performed. Here, the laser light that is applied from the laser light application component 72 is applied so as to follow the inner surface 111s of the body casing portion 111 -- specifically, the laser light is applied at a small angle θ (see angle θ in FIG. 9) of about 5 to 20° with respect to the inner surface 111s of the body casing portion 111. For this reason, as for the outer peripheral portion 125b of the rear head 125 and the welded portion 111w of the body casing portion 111, a penetration region of the joint portion can be largely ensured with a relatively small amount of heat input. Further, in addition to the fact that laser welding is employed, the laser light is directly applied to the joint portion such that the laser light follows the inner surface 111s of the body casing portion 111, so the amount of heat that is inputted to the rear head 125 can be reduced, almost no distortion occurs in the rear head 125, and drawbacks such as the axial center of the crankshaft 117 shifting and the amount of wear in the swing compression mechanism 115 becoming large can be avoided.

It will be noted that, as will be apparent from FIG. 7 and FIG. 9, the laser light from the laser light application component 72 of the laser welder is applied from below the rear head 125, that is, from the opposite side of the side of the rear head 125 where the drive motor 116 is present. Further, as will be apparent from FIG. 7, the rear head 125 that is on the lowermost side of the swing compression mechanism 115 (the side away from the drive motor 116) extends as far as the body casing portion 111, and a method is employed where the rear head 125 and the body casing portion 111 are laser-welded together from below, so the focal distance of the laser can be reduced, and the precision of the joint can be raised.

Further, laser welding is implemented across the entire circumference with respect to the portion where the annular outer peripheral portion 125b of the rear head 125 and the welded portion 111w of the body casing portion 111 face each other.

### <Operation of Compressor>

When the drive motor 116 is driven, the crankshaft 117 rotates about the rotating axis 101a, the eccentric shaft portion 117a eccentrically rotates, and the roller portion 121a of the piston 121 into which the eccentric shaft portion 117a is fitted revolves while its outer peripheral surface contacts the inner peripheral surface of the cylinder hole 124a in the first cylinder block 124. Additionally, as the roller portion 121a revolves inside the cylinder chamber, the blade portion 121b moves back and forth while both side surfaces thereof are held by the bushes 122. When this happens, low-pressure refrigerant gas is sucked in from the suction pipe 119a that is connected to the suction hole 124b in the first cylinder block 124, is compressed to a high pressure, and thereafter becomes high-pressure refrigerant gas and is discharged from the discharge path 124c.

Similarly, when the drive motor 116 is driven, the eccentric shaft portion 117b eccentrically rotates, and the roller portion of the piston 128 into which the eccentric shaft portion 117b is fitted revolves while its outer peripheral surface contacts the inner peripheral surface of the cylinder hole in the second cylinder block 126. Thus, low-pressure refrigerant gas is sucked in from the suction pipe 119b that is connected to the suction hole in the second cylinder block 126, is compressed to a high pressure, and thereafter becomes high-pressure refrigerant gas and is discharged from the discharge path.

### <Characteristics of Compressor>

(1) In the swing type compressor 101 pertaining to the third embodiment, rather than welding together the body casing portion 111 and the swing compression mechanism 115 by arc welding as has conventionally been the case, the joining together of both is performed by laser welding.
   In a method where the laser light is applied from the outside of the casing 110 such that the laser penetrates the body casing portion 111, the penetration region of the body casing portion 111 and the rear head 125 ends up becoming small unless time is taken to ensure a large amount of heat input because the body casing portion 111 has a plate thickness that is equal to or greater than 5 mm (here, 8 to 10 mm). On the other hand, when the amount of heat input is increased, distortion occurs in the body casing portion 111, and ensuring the positional precision of the rear head 125, that is, ensuring the precision of the relative positions of the swing compression mechanism 115 and the crankshaft 117, becomes difficult.
   In light of this, in the compressor 101, the laser light is directly applied, such that the laser light follows the inner surface 111s of the body casing portion 111, with respect to the portion where the welded portion 111w of the inner surface 111s of the body casing portion 111 and the outer peripheral surface of the outer peripheral portion 125b of the rear head 125 that contacts the welded portion 111w face each other. In this manner, a method is employed where the laser light is directly applied from the inside of the casing 110 to the portion where the welded portion 111w and the outer peripheral portion 125b face each other to perform laser welding, so the penetration region of both is increased with a relatively small amount of heat input and the strength of the joint portion is ensured.
   Further, because the body casing portion 111 and the rear head 125 are directly welded together by laser welding, it becomes unnecessary to intervene an intermediate member such as the mounting plate that had conventionally been used, and costs can be lowered and the compressor 101 can be made compact.
   It will be noted that, when the amount of heat input is the same, in comparison to a method where the laser light is applied from the outside of the casing 110, penetrates the body casing portion 111 and welds the rear head 125 to the body casing portion 111, the strength of the joint portion becomes higher when the above-described method, where the laser light is directly applied to the portion where the rear head 125 and the body casing portion 111 face each other, is employed.
(2) The effect of heat input amount reduction resulting from employing a method where, as described above in (1), the laser light is directly applied from the inside of the casing 110 to the portion where the welded portion 111w and the outer peripheral portion 125b face each other to perform laser welding rather than a method where the laser light is applied from the outside of the casing 110, penetrates the body casing portion 111 and welds the rear head 125 works extremely effectively when the plate thickness of the body casing portion 111 is equal to or greater than 5 mm and particularly when the plate thickness of the body casing portion 111 exceeds 7 mm. This is because, in a case where the plate thickness of the body casing portion 111 is 8 to 10 mm as in the compressor 101, when the laser light is applied from the outside of the casing 110 to perform laser welding, a large amount of heat must enter the rear head 125 and the body casing portion 111 in order to sufficiently ensure the penetration region of the body casing portion 111 and the rear head 125, distortion occurs in the body casing portion 111, and ensuring the precision of the relative positions of the swing compression mechanism 115 and the crankshaft 117 becomes difficult.
(3) In the swing type compressor 101 pertaining to the third embodiment, the front head 123, the first cylinder block 124, the rear head 125, and the piston 121 and the like are produced through a semi-molten die cast molding process. For this reason, cylinder blocks and pistons whose tensile strength and hardness are higher than those of cylinder blocks and pistons made of flake graphite cast iron that are produced by a conventional sand mold casting method can be easily obtained. Further, the members can be molded in a near-net shape by semi-molten die casting, there is little machining such as cutting, and the welding strength becomes higher than that of FC material.
   It will be noted that it is also possible to employ a semi-solid die cast molding process rather than a semi-molten die cast molding process.
(4) The swing type compressor 101 pertaining to the third embodiment is a compressor for CO₂ refrigerant and its internal pressure becomes extremely high, but because laser welding is performed across the entire circumference with respect to the portion where the annular outer peripheral portion 125b of the rear head 125 and the welded portion 111w of the body casing portion 111 face each other, drawbacks such as the swing compression mechanism 115 coming off of the casing 110 do not arise.
(5) In the swing type compression 101 pertaining to the third embodiment, the rear head 125, which is one configural part of the swing compression mechanism 115, is inserted into the body casing portion 111 in a state where it is integrated with the rotor 152 of the drive motor 116, and laser welding is performed in a state where the stator 151 and the rotor 152 are centered and are assembled. Additionally, because distortion is controlled as mentioned above by laser welding, in the compressor 101, the uniformity of the clearance between the stator 151 and the rotor 152 improves, and the precision of the relative positions of each of the configural parts of the swing compression mechanism 115 can be easily ensured, so vibration and the amount of wear of each of the configural parts of the swing compression mechanism 115 can be kept within the range of predetermined design values.

### <Modifications of Third Embodiment>

(A) The compressor 101 pertaining to the third embodiment employs a swing type where the roller portion and the blade portion are integrated among rotary type compressors that perform compression as a result of a piston rotating inside a cylinder chamber, but the present invention is also applicable to a compressor where the roller portion and the blade portion are separate.
(B) In the compressor 101 pertaining to the third embodiment, the annular outer peripheral portion 125b of the rear head 125 is laser-welded to the body casing portion 111, but the compressor can also be given a configuration where, rather than the rear head 125, the first cylinder block 124, the middle plate 127, the second cylinder block 126 or the front head 123 extend as far as the body casing portion 111 and those parts and the body casing portion 111 are laser-welded together.
(C) The compressor 101 pertaining to the third embodiment is a so-called two-cylinder type of compressor where a cylinder chamber is formed between the front head 123 and the middle plate 127 and where a cylinder chamber is formed between the middle plate 127 and the rear head 125, but the present invention can also be applied to a compressor where there is no middle plate (a so-called one-cylinder type of compressor).

### INDUSTRIAL APPLICABILITY

The method for producing a compressor pertaining to the present invention has the effect that it can realize production of a low-distortion compressor by controlling heat affects resulting from welding while sufficiently ensuring the welding strength of a casing and an inside part or a body portion casing and end portion casings, and is useful as a method for producing a compressor where a casing and an inside part are welded together and a compressor where a body portion casing and end portion casings are welded together.

## Claims

1. A method for producing a compressor (1, 101) that is disposed with a casing (10, 11, 111) that includes a first portion (11a, 11w, 111w) on its inner surface (11s, 111s) and an inside part (60, 125) that is housed inside the casing and includes a second portion (60a, 61, 125b) that faces the first portion, the method comprising:
an aligning step of causing the first portion of the casing and the second portion of the inside part to face each other; and
a laser welding step of applying laser light to at least part of the portion where the first portion and the second portion face each other to thereby laser-weld the casing and the inside part together.

2. The method for producing a compressor of claim 1, wherein
in the aligning step, the casing and the inside part are aligned such that a clearance between the first portion (11a) and the second portion (60a) becomes greater than 0 mm and equal to or less than 0.6 mm, and
in the laser welding step, the first portion in a state where a hole is not formed therein is laser-welded to the second portion without a welding filler being supplied thereto.

3. The method for producing a compressor of claim 2, wherein in the aligning step, the casing and the inside part are aligned such that the clearance becomes greater than 0 mm and equal to or less than 0.2 mm.

4. The method for producing a compressor of claim 2 or 3, wherein in the laser welding step, a melting site (70) of the first portion and the second portion to which the laser light is applied and which melts becomes the shape of an open curve when seen from a direction perpendicular to the first portion and the second portion.

5. The method for producing a compressor of claim 4, wherein in the laser welding step, the melting site becomes V-shaped when seen from a direction perpendicular to the first portion and the second portion.

6. The method for producing a compressor of claim 5, wherein in the laser welding step, the apex of the V of the melting site becomes a rounded shape.

7. The method for producing a compressor of claim 1, wherein in the laser welding step, the laser light is applied to at least part of the portion where the first portion (11w, 111w) and the second portion (61, 125b) face each other such that the laser light follows the inner surface of the casing (11, 111), whereby the casing and the inside part are laser-welded together.

8. The method for producing a compressor of claim 7, wherein the thickness of the first portion of the casing is equal to or greater than 5 mm.

9. The method for producing a compressor of claim 7 or 8, wherein
the compressor is a scroll type compressor (1) and is disposed with a rotating mechanism (16) and a rotating mechanism that includes a bearing (60) that supports a rotating shaft (17) of the rotating machine, and
the inside part is the bearing.

10. The method for producing a compressor of claim 7 or 8, wherein
the compressor is a rotary type compressor (101) and is disposed with a cylinder member (124, 126) and a compression mechanism (115) that includes a head member (123, 125, 127) that blocks an opening in the cylinder member, and
the inside part is the cylinder member or the head member.

11. The method for producing a compressor of claim 10, wherein the inside part is the cylinder member or the head member that is molded by semi-molten/semi-solid die casting.

12. The method for producing a compressor of claim 10 or 11, wherein
the compressor is further disposed with a rotating machine (116) that rotates a rotor (121) that eccentrically rotates in a space that is formed by the cylinder member and the head member,
the head member includes a first head member (123) that is positioned on the rotating machine side of the cylinder member and a second head member (125) that faces the first head member with the cylinder member being interposed therebetween,
the inside part is the second head member, and
in the laser welding step, the laser light is applied, from the opposite side of the side where the rotating machine is present, to the portion where the first portion of the casing and the second portion of the second head member face each other.

13. The method for producing a compressor of any of claims 7 to 12, wherein in the laser welding step, the laser light is applied at an angle that is equal to or less than 30 degrees with respect to the inner surface of the casing.

14. The method for producing a compressor of any of claims 7 to 13, wherein in the laser welding step, the laser light is applied with respect to the portion where the first portion and the second portion face each other across the entire circumference thereof.

15. A compressor that is produced by the method for producing a compressor of any of claims 1 to 14 and compresses carbon dioxide.

16. A method for producing a compressor (1) that is disposed with a casing (10) that includes a cylindrical body portion casing (11) and end portion casings (12, 13) that are welded to end portions of the body portion casing so as to be airtight, the method comprising:
an aligning step of aligning the body portion casing and the end portion casings; and
a laser welding step of laser-welding the body portion casing to the end portion casings along a circumferential direction of the body portion casing while supplying a welding filler.

17. The method for producing a compressor of claim 16, wherein in the laser welding step, the body portion casing is fillet-welded to the end portion casings.

18. The method for producing a compressor of claim 16, wherein in the laser welding step, the body portion casing is butt-welded to the end portion casings.

19. A compressor that is produced by the method for producing a compressor of any of claims 16 to 18 and compresses carbon dioxide.
